# EUROPÄISCHE PATENTSCHRIFT

(11) **EP 3 070 636 B1**
(45) Veröffentlichungstag und Bekanntmachung des Hinweises auf die Patenterteilung: **22.04.2020**
(21) Anmeldenummer: 16158533.6
(22) Anmeldetag: 03.03.2016
(51) Int. Cl.: G06K 7/00, G06K 7/015, G06K 19/077, H04B 5/00

(54) **LESEFELDINDIKATOR ZUR PRÜFUNG DES LESEFELDES EINES RFID-LESEGERÄTES**
READ FIELD INDICATOR FOR TESTING THE READ FIELD OF AN RFID READER
INDICATEUR DE CHAMP DE LECTURE DESTINÉ À VÉRIFIER LE CHAMP DE LECTURE D'UN LECTEUR RFID

(30) Priorität: 19.03.2015 DE 202015002098 U
(43) Veröffentlichungstag der Anmeldung: 21.09.2016
(73) Patentinhaber: ASTRA Gesellschaft für Asset Management mbH & Co. KG, 30890 Barsinghausen (DE)
(72) Erfinder: Maaß, Norman, 30455 Hannover (DE); Stobbe, Anatoli, 30890 Barsinghausen (DE)
(74) Vertreter: Patentanwälte Thömen & Körner

(56) Entgegenhaltungen:
- EP-A1- 2 775 631
- DE-A1-102004 039 650

## Beschreibung

Die Erfindung betrifft ein RFID-System nach dem Oberbegriff des Anspruchs 1.

Beim Einsatz von RFID-Transpondern in einem RFID-System besteht das Problem, die Lesefeldstärke im Lesefeld zu analysieren, um eine zuverlässige Kommunikation zwischen den RFID-Transpondern und dem Lesegerät zu gewährleisten. Das Lesefeld wird nämlich durch Umgebungseinflüsse, wie zum Beispiel Metall, Wasser, Kunststoff verändert und kann durch Dämpfung oder Reflexionen so weit reduziert werden, dass eine zuverlässige Kommunikation an Orten geringer Feldstärke nicht mehr möglich ist. RFID-Transponder selbst reagieren auf zu geringe Feldstärke durch fehlerhaftes Beantworten oder nicht Beantworten von Befehlen des Lesegeräts. Eine Auswertung kann somit nur mittelbar durch das Lesegerät vorgenommen werden. Eine genaue Bestimmung der Lesefeldstärke ist nicht möglich, da keine direkte Anzeige erfolgt, sondern nur aus der Fehlerquote der Antworten oder dem Ausbleiben von Antworten mittelbar auf die Lesefeldstärke geschlossen werden kann. Der Vorgang ist außerdem zeitaufwendig, da ein Dialog zwischen RFID-Transponder und Lesegerät zustande kommen und ablaufen muss und das Lesegerät dann diesen Dialog auswerten muss. Dazu muss das Lesegerät beobachtet werden können, was bei einem ausgedehnten Lesefeld den Test wesentlich erschwert.

Aus der EP 2 775 631 A1 ist eine Kommunikations- und Zuführvorrichtung bekannt. Die Kommunikationsvorrichtung umfasst einen Sensor, der einen Positionsversatz zwischen einer Antenne und einer drahtlosen Vorrichtung basierend auf der Magnetfeldstärke anzeigt. Der Sensor ist in Bezug auf die Antenne so angeordnet, dass eine Wirkung des von der Antenne erzeugten Magnetfelds auf das Ausgangssignal des Sensors unterdrückt wird.

Aus der DE 10 2004 039 650 A1 ist ein System mit zumindest zwei Einheiten zum kontaktlosen Aufladen eines Energiespeichers einer Energiesenke durch eine Energiequelle bekannt. Zwischen den zwei Einheiten können Daten übertragen werden. Eine für das Aufladen notwendige Energie wird von der Energiequelle zu der Energiesenke über einen Träger eines Wechselfeldes übertragen, während die über Seitenbänder übertragenen Daten ebenfalls Energie benötigen. Auf Grund von Zulassungsvorschriften ist die maximale Sendeleistung jedoch begrenzt. Durch Pausieren der Datenübertragung kann die Gesamtleistung auf den Träger konzentriert werden und durch die nun mögliche höhere Trägerleistung vom Empfänger eine höhere Leistung zum Aufladen des Energiespeichers entnommen werden.

Der Erfindung liegt die Aufgabe zu Grunde, bei einem RFID-System einen Lesefeldindikator eines zu schaffen, der es ermöglicht, unmittelbar am Einsatzort eines kompatiblen RFID-Transponders selbst Angaben über die Lesefeldstärke zu erfassen und auszugeben.

Diese Aufgabe wird bei einem RFID-System nach dem Oberbegriff des Anspruchs 1 durch die Merkmale dieses Anspruchs gelöst.

Weiterbildungen und vorteilhafte Ausgestaltungen der Erfindung ergeben sich aus den Unteransprüchen.

Durch die erfindungsgemäße Ausgestaltung des RFID-Systems wird das Lesefeld in gleicher Weise belastet, wie durch einen kompatiblen RFID-Transponder. Dabei wird die nutzbare Lesefeldstärke durch die Indikatorschaltung mit der Feldstärkeanzeigevorrichtung unmittelbar am Ort des vorgesehenen Einsatzes des RFID-Transponders ermittelt und angezeigt. Eine Kommunikation mit dem Lesegerät ist nicht nötig. Es reicht aus, wenn das Lesegerät lediglich ein konstantes Lesefeld aussendet. Die Anzeige der Feldstärke des Lesefeldes erfolgt unmittelbar, und vermeidet eine Verzögerung durch die sonst benötigte Zeit für einen Aufbau und eine Durchführung einer Kommunikation zwischen Transponder und Lesegerät und deren Auswertung. Weiterhin ist die Ansprechempfindlichkeit des Lesefeldindikators so eingestellt, dass sie der Mindestlesefeldstärke für eine Kommunikation des RFID-Transponders mit dem RFID-Lesegerät entspricht. Dadurch ist unmittelbar erkennbar, ob und wo sich Orte innerhalb des Lesefeldes befinden, die nicht die erforderliche Mindestlesefeldstärke aufweisen. Weiterhin ist es natürlich auch möglich, auf diese Weise Orte maximaler Lesefeldstärke zu ermitteln, um die maximale Lesereichweite zu bestimmen.

Bei einer bevorzugten Ausführung weisen der Träger und die Antenne die gleichen hochfrequenten Eigenschaften wie der Träger und die Antenne eines kompatiblen RFID-Transponders auf.

Auf diese Weise wird das Lesefeld durch den Lesefeldindikator in gleicher Weise beeinflusst, wie durch einen kompatiblen RFID-Transponder und außerdem wird die gleiche Energie dem Lesefeld entnommen, wie durch einen kompatiblen RFID-Transponder.

Ferner können der Träger und die Antenne die gleichen Abmessungen wie der Träger und die Antenne des kompatiblen RFID-Transponders aufweisen.

Auf diese Weise werden die Eigenschaften eines RFID-Transponders auch über dessen Flächenausdehnung sehr genau nachgebildet, so dass reproduzierbare Ergebnisse erwartet werden können.

Vorzugsweise ist zwischen der Antenne und der Indikatorschaltung eine Koppelschaltung zwischen der Antenne und der Indikatorschaltung eine Koppelschaltung aus der Menge induktive Koppelschaltung, kapazitive Koppelschaltung, galvanische Koppelschaltung, angeordnet ist, die die gleichen hochfrequenten Eigenschaften wie eine Koppelschaltung zwischen der Antenne und dem Chipmodul des RFID-Transponders aufweist.

Dadurch wird die aus dem Lesefeld über die Antenne entnommene Energie in gleicher Weise und in gleicher Höhe auf die Indikatorschaltung übertragen, wie bei einem kompatiblen RFID-Transponder. Durch den Einsatz unterschiedlicher Arten von Koppelschaltungen, also induktive, kapazitive, galvanische kann die erforderliche Impedanzanpassung zwischen der Antenne und der Indikatorschaltung je nach Art der Antenne optimiert werden. Weiterhin sind so getrennte Module aus Antennen und Indikatorschaltungen möglich, die für Meß- und Prüfeinsätze dann miteinander gekoppelt werden können.

Die Indikatorschaltung und/oder die Koppelschaltung können ein Dämpfungsglied umfassen, das die gleichen Dämpfungseigenschaften wie das Chipmodul und/oder die Koppelschaltung des kompatiblen RFID-Transponders aufweisen.

Auch diese Maßnahme dient dazu, die Eigenschaften des Lesefeldindikators in Übereinstimmung mit einem kompatiblen RFID-Transponder zu bringen, so dass exakte reproduzierbare Ergebnisse bei der Feldstärkeerfassung erzielt werden können.

Vorzugsweise wird die Feldstärkeanzeigevorrichtung aus einer vom Lesefeld unabhängigen gesonderten Energiequelle gespeist.

Dadurch ist es möglich, eine optische und/oder akustische Anzeige anzusteuern, die mehr Energie benötigt, als dem Lesefeld entnehmbar ist, ohne dass dadurch das Lesefeld in irgendeiner Weise anders als bei einem kompatiblen RFID-Transponder beeinflusst wird.

Bei einer bevorzugten Ausführung ist die gesonderte Energiequelle eine Knopfzelle.

Diese Energiequelle lässt sich auf dem Träger des Lesefeldindikators integrieren, ohne dass dadurch eine wesentliche Beeinflussung und Beeinträchtigung des Lesefeldes und die Erfassung desselben durch den Lesefeldindikator zu erwarten ist.

Die Indikatorschaltung oder die Feldstärkeanzeigevorrichtung kann einen Verstärker umfassen.

Dadurch werden ausreichende Reserven für eine Ansteuerung der Feldstärkeanzeigevorrichtung geschaffen, um auch bei einer geringen Feldstärke des Lesefeldes sicher anzusprechen.

Die Antenne kann als elektrische Antenne in Form eines Monopols, Dipols, in mechanisch resonanter Länge oder mechanisch verkürzt und elektrisch verlängert ausgebildet sein. Ferner kann die Antenne als magnetische Antenne in Form einer Schleife, Spule oder als Schlitzantenne ausgebildet sein. Die Antenne kann auch aus Komponenten bestehen, die der Antenne unterschiedlichen Polarisationen und/oder unterschiedliche Strahlungsdiagramme und/oder Antennengewinne aufprägen.

Die Vielfalt der Einsatz- und Anwendungsmöglichkeiten wird dadurch erheblich gesteigert. Es lassen sich geeignete Antennenformen auswählen, die für den Anwendungsfall mit einem realen RFID-Transponder optimal geeignet sind.

Weiterhin können unterschiedliche Antennenarten als Antenne austauschbar mit der Indikatorschaltung koppelbar sein.

Dadurch können unter Beibehaltung der Eigenschaften der Indikatorschaltung, die den Eigenschaften eines Chipmoduls eines realen RFID-Transponders entspricht, unterschiedliche Antennenarten schnell und einfach ausgetauscht und getestet werden.

Nachfolgend wird die Erfindung anhand eines Ausführungsbeispiels erläutert, das in der Zeichnung dargestellt ist.

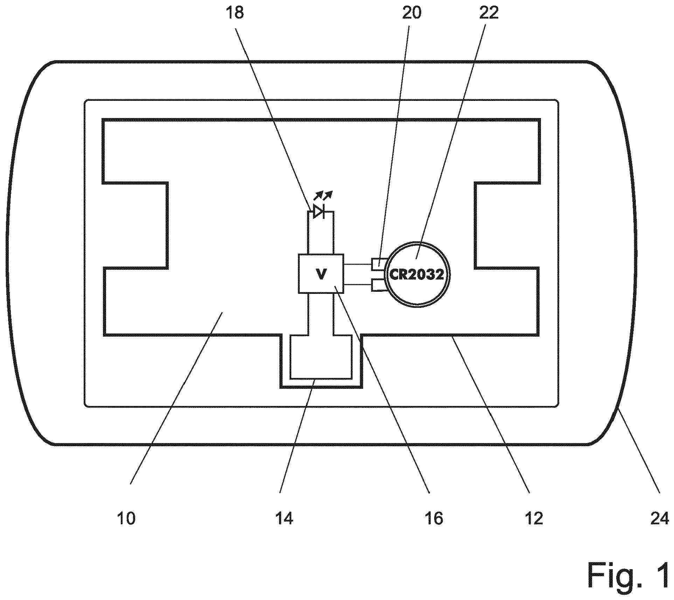

Die Fig. 1 zeigt einen Lesefeldindikator eines RFID-Systems aus einem Träger mit einer Antenne und einer Indikatorschaltung.

Auf einem als Leiterplatte ausgeführten Träger 10 sind eine Antenne 12, eine induktive Koppelschaltung in der Form einer Koppelschleife 14 und eine Indikatorschaltung 16, 18 angeordnet. Die Antenne 12, die Koppelschleife 14 sowie Leitungen der Indikatorschaltung sind als gedruckte Leiterbahnen in Form von einer nach Ätzen verbleibenden Kupferschicht realisiert. Die Indikatorschaltung 16, 18 ist mit der als Schleife ausgeführten Antenne 12 induktiv durch die Koppelschleife 14 gekoppelt. Die Indikatorschaltung umfasst und steuert eine Feldstärkeanzeigevorrichtung 18 mit einer LED an. Die Indikatorschaltung umfasst ferner ein Dämpfungsglied sowie einen Verstärker 16, wobei das Dämpfungsglied Bestandteil des Verstärkers 16 oder in die Verstärkerschaltung integriert sein kann. Zur Energieversorgung der Indikatorschaltung einschließlich Verstärker 16 und Feldstärkeanzeigevorrichtung 18 dient eine gesonderte Energiequelle 22 in Form einer Knopfzelle. Diese ist austauschbar und über Kontaktzungen und Kontaktplättchen 20 der Leiterplatte galvanisch mit der Indikatorschaltung verbunden.

Das Dämpfungsglied kann auch Bestandteil der Koppelschleife sein und bildet die Last eines mit der Antenne gekoppelten Chipmoduls eines kompatiblen RFID-Transponders nach. Der Verstärker 16 verstärkt das aus dem Lesefeld gewonnene HF-Signal und steuert die LED der Feldstärkeanzeigevorrichtung 18 an. Da diese mehr Energie verbraucht, als das Lesefeld zur Verfügung stellt und bei Ansprechen ein starker Zuwachs an Energie erforderlich ist, wird die Energie von der als Knopfzelle ausgebildeten externen Energiequelle 22 bereitgestellt und die Feldstärkeanzeigevorrichtung in Hinblick auf die Energieentnahme von der Antenne und der Koppelschleife entkoppelt.

Die Ansprechschwelle der Feldstärkeanzeigevorrichtung 18 ist so eingestellt, dass die LED bei der Feldstärke zu leuchten beginnt, die dem gleichen Wert entspricht, bei der ein RFID-Transponder ausreichend Energie zur Kommunikation mit dem Lesegerät aus dem Lesefeld entnehmen könnte.

Durch die Entkopplung der Energieentnahme der Antenne 12 mit der Koppelschleife 14 und dem Dämpfungsglied aus dem Lesefeld einerseits und der Energieentnahme der Feldstärkeanzeigevorrichtung 18 aus der separaten Energiequelle 22 kann die Indikatorschaltung an jede Anwendung und an jeden RFID-Transponder angepasst werden, in dem im Wesentlichen lediglich die Transponderantenne 12 ausgetauscht wird.

Der Lesefeldindikator kann zum Schutz gegen äußere Einflüsse in einem Gehäuse 24 angeordnet sein, das geringe oder gleiche Dämpfungseigenschaften wie ein Gehäuse für einen kompatiblen RFID-Transponder aufweist.

Ein erstes Anwendungsbeispiel für den erfindungsgemäßen Lesefeldindikator bildet die Anordnung eines Transponders zur Fahrzeugidentifikation an der Windschutzscheibe eines Kraftfahrzeugs. Derartige Windschutzscheiben enthalten oft Materialien zur Beheizung oder Wärmedämmung, die eine starke Dämpfung auf elektromagnetische Felder im Bereich der Arbeitsfrequenz von RFID-Transpondern aufweisen. Meist ist lediglich ein kleiner Bereich ausgelassen, der eine geringere Dämpfung hat und zur Kommunikation von RFID-Transpondern geeignet ist. Das Auffinden dieses HF-durchlässigen Bereichs oder HF-durchlässigen Fensters wird durch einen entsprechenden Lesefeldindikator erleichtert, der bei eingeschaltetem Lesefeld über den vermuteten HF-durchlässigen Bereich geführt und an der Stelle für eine Markierung vorübergehend positioniert wird, an der die Lesefeldstärke maximal ist. Dieser Bereich kann dann zur Anbringung eines regulären RFID-Transponders genutzt werden.

Ein zweites Anwendungsbeispiel bildet ein Lesefeld in einem abgegrenzten Raum, der nach außen hin abgeschirmt ist, durch die Abschirmung innen aber zu Reflexionen des Lesefeldes mit Bereichen hoher und niedriger Feldstärke führt. Durch räumliches Abtasten des Lesefelds im Inneren des Raums und auch Verschwenken des Lesefeldindikators in seinen Ausrichtungen im Raum kann festgestellt werden, ob die Verteilung der Feldstärke für eine Kommunikation ausreichend ist oder bestimmte Bereiche durch Auslöschung reflektierter und überlagerter Felder oder ungünstige Polarisation nicht entsprechend ausgeleuchtet sind und Korrekturen der Leseantennen oder anderer Reflektoren erfordern.

Bei einem dritten Anwendungsbeispiel kann ein für einen vorgesehenen Einsatz eines realen RFID-Transponders geeignetes Antennendesign ermittelt werden. Dazu werden unterschiedliche Antennenarten als Module bereitgehalten, die mit einer Indikatorschaltung gekoppelt werden, die ihrerseits die Eigenschaften eines realen RFID-Chips nachbildet.

Bei den unterschiedlichen Antennenarten kann es sich um elektrische Antennen in Form eines Monopols, Dipols, in mechanisch resonanter Länge oder mechanisch verkürzt und elektrisch verlängert handeln. Als weitere Antennenarten kommen magnetische Antennen in Form einer Schleife, Spule oder als Schlitzantenne in Betracht. Darüber hinaus können Antennenarten eingesetzt werden, deren Komponenten zu unterschiedlichen Polarisationen und/oder unterschiedliche Strahlungsdiagrammen und/oder Antennengewinnen führen.

Unterschiedliche Antennenmodule werden mit einer ebenfalls als Modul ausgebildeten Indikatorschaltung gekoppelt und nacheinander in das Lesefeld eingeführt, um herauszufinden, welche Antennenart ausreichende oder optimale Ergebnisse bei den vorgegebenen Randbedingungen des Lesefeldes erreicht.

## Patentansprüche

1. RFID-System, bestehend aus einem RFID-Lesegerät und wenigstens einem passiven kompatiblen RFID-Transponder, wobei der RFID-Transponder eine auf einem Träger angeordnete Antenne und ein mit der Antenne gekoppeltes Chipmodul umfasst und eine Mindestlesefeldstärke für eine Kommunikation mit dem RFID-Lesegerät benötigt, **dadurch gekennzeichnet, dass** das RFID-System zusätzlich wenigstens einen Lesefeldindikator umfasst, der wie der RFID-Transponder ebenfalls eine auf einem Träger (10) angeordnete Antenne (12) umfasst, jedoch die Antenne (12) mit einer Indikatorschaltung (16,18) gekoppelt ist, die eine optische und/oder akustische Feldstärkeanzeigevorrichtung (18) umfasst und ansteuert, wobei der Lesefeldindikator eine minimale Ansprechempfindlichkeit aufweist, die der Mindestlesefeldstärke des RFID-Transponders entspricht.

2. RFID-System nach Anspruch 1, **dadurch gekennzeichnet, dass** der Träger (10) und die Antenne (12) die gleichen hochfrequenten Eigenschaften wie der Träger und die Antenne des kompatiblen RFID-Transponders aufweisen.

3. RFID-System nach Anspruch 1 oder 2, **dadurch gekennzeichnet, dass** der Träger (10) und die Antenne (12) die gleichen Abmessungen wie der Träger und die Antenne des RFID-Transponders aufweisen.

4. RFID-System nach einem der Ansprüche 1 bis 3, **dadurch gekennzeichnet, dass** zwischen der Antenne (12) und der Indikatorschaltung (16,18) eine Koppelschaltung (14) aus der Menge induktive Koppelschaltung, kapazitive Koppelschaltung, galvanische Koppelschaltung, angeordnet ist, die die gleichen hochfrequenten Eigenschaften wie eine Koppelschaltung zwischen der Antenne und dem Chipmodul des RFID-Transponders aufweist.

5. RFID-System nach einem der Ansprüche 1 bis 4, **dadurch gekennzeichnet, dass** die Indikatorschaltung (16,18) und/oder die Koppelschaltung (14) ein Dämpfungsglied umfasst, dass die gleichen Dämpfungseigenschaften wie das Chipmodul und/oder die Koppelschaltung des kompatiblen RFID-Transponders aufweist.

6. RFID-System nach einem der Ansprüche 1 bis 5, **dadurch gekennzeichnet, dass** die Feldstärkeanzeigevorrichtung (18) aus einer vom Lesefeld unabhängigen gesonderten Energiequelle (22) gespeist ist.

7. RFID-System nach Anspruch 6, **dadurch gekennzeichnet, dass** die gesonderte Energiequelle (22) eine Knopfzelle ist.

8. RFID-System nach einem der Ansprüche 1 bis 7, **dadurch gekennzeichnet, dass** die Indikatorschaltung einen Verstärker (16) umfasst.

9. RFID-System nach einem der Ansprüche 1 bis 8, **dadurch gekennzeichnet, dass** die Antenne (12) als elektrische Antenne in Form eines Monopols, Dipols, in mechanisch resonanter Länge oder mechanisch verkürzt und elektrisch verlängert ausgebildet ist, oder dass die Antenne als magnetische Antenne in Form einer Schleife, Spule oder als Schlitzantenne ausgebildet ist, oder dass die Antenne aus Komponenten besteht, die unterschiedliche Polarisationen und/oder unterschiedliche Strahlungsdiagramme und/oder Antennengewinne aufweisen.

10. RFID-System nach einem der Ansprüche 1 bis 9, **dadurch gekennzeichnet, dass** unterschiedliche Antennenarten als Antenne (12) austauschbar mit der Indikatorschaltung (16,18) koppelbar sind.

## Claims

1. RFID system, consisting of an RFID reader and at least one passive compatible RFID transponder, wherein the RFID transponder comprises an antenna arranged on a carrier and a chip module coupled to the antenna and requires a minimum read field strength for communication with the RFID reader, **characterized in that** the RFID system additionally comprises at least one read field indicator which, like the RFID transponder, likewise comprises an antenna (12) arranged on a carrier (10), but the antenna (12) is coupled to an indicator circuit (16, 18), which comprises and drives an optical and/or acoustic field strength indicator device (18), wherein the read field indicator has a minimum response sensitivity corresponding to the minimum read field strength of the RFID transponder.

2. RFID system according to Claim 1, **characterized in that** the carrier (10) and the antenna (12) have the same radio-frequency properties as the carrier and the antenna of the compatible RFID transponder.

3. RFID system according to Claim 1 or 2, **characterized in that** the carrier (10) and the antenna (12) have the same dimensions as the carrier and the antenna of the RFID transponder.

4. RFID system according to any of Claims 1 to 3, **characterized in that** a coupling circuit (14) from the set comprising inductive coupling circuit, capacitive coupling circuit, galvanic coupling circuit is arranged between the antenna (12) and the indicator circuit (16, 18), said coupling circuit having the same radio-frequency properties as a coupling circuit between the antenna and the chip module of the RFID transponder.

5. RFID system according to any of Claims 1 to 4, **characterized in that** the indicator circuit (16, 18) and/or the coupling circuit (14) comprise(s) a damping element having the same damping properties as the chip module and/or the coupling circuit of the compatible RFID transponder.

6. RFID system according to any of Claims 1 to 5, **characterized in that** the field strength indicator device (18) is fed from a separate energy source (22) independent of the read field.

7. RFID system according to Claim 6, **characterized in that** the separate energy source (22) is a button cell.

8. RFID system according to any of Claims 1 to 7, **characterized in that** the indicator circuit comprises an amplifier (16).

9. RFID system according to any of Claims 1 to 8, **characterized in that** the antenna (12) is embodied as an electrical antenna in the form of a monopole, dipole, with mechanically resonant length or in a mechanically shortened and electrically lengthened fashion, or **in that** the antenna is embodied as a magnetic antenna in the form of a loop, coil or as a slot antenna, or **in that** the antenna consists of components having different polarizations and/or radiation patterns and/or antenna gains.

10. RFID system according to any of Claims 1 to 9, **characterized in that** different types of antenna are able to be coupled as antenna (12) to the indicator circuit (16, 18) in an exchangeable manner.

## Revendications

1. Système RFID, comprenant un lecteur RFID et au moins un transpondeur RFID compatible passif, le transpondeur RFID comprenant une antenne disposée sur un support et un module à puce couplé à l'antenne et nécessitant une intensité de champ de lecture minimale pour communiquer avec le lecteur RFID, **caractérisé en ce que** le système RFID comprend en outre au moins un indicateur de champ de lecture qui, comme le transpondeur RFID, comprend également une antenne (12) disposée sur un support (10), l'antenne (12) étant toutefois couplée à un circuit d'indicateur (16, 18) qui comprend et commande un dispositif d'indication d'intensité de champ optique et/ou acoustique (18), l'indicateur de champ de lecture ayant une sensibilité de réponse minimale qui correspond à l'intensité de champ de lecture minimale du transpondeur RFID.

2. Système RFID selon la revendication 1, **caractérisé en ce que** le support (10) et l'antenne (12) ont les mêmes propriétés à haute fréquence que le support et l'antenne du transpondeur RFID compatible.

3. Système RFID selon la revendication 1 ou 2, **caractérisé en ce que** le support (10) et l'antenne (12) ont les mêmes dimensions que le support et l'antenne du transpondeur RFID.

4. Système RFID selon l'une des revendications 1 à 3, **caractérisé en ce qu'**un circuit de couplage (14) du groupe comprenant le circuit de couplage inductif, le circuit de couplage capacitif, le circuit de couplage galvanique, est disposé entre l'antenne (12) et le circuit d'indicateur (16, 18) et a les mêmes propriétés à haute fréquence qu'un circuit de couplage situé entre l'antenne et le module à puce du transpondeur RFID.

5. Système RFID selon l'une des revendications 1 à 4, **caractérisé en ce que** le circuit d'indicateur (16, 18) et/ou le circuit de couplage (14) comprend un élément d'amortissement qui a les mêmes propriétés d'amortissement que le module à puce et/ou le circuit de couplage du transpondeurs RFID compatible.

6. Système RFID selon l'une des revendications 1 à 5, **caractérisé en ce que** le dispositif d'indication d'intensité de champ (18) est alimenté par une source d'énergie distincte (22) indépendante du champ de lecture.

7. Système RFID selon la revendication 6, **caractérisé en ce que** la source d'énergie distincte (22) est une pile bouton.

8. Système RFID selon l'une des revendications 1 à 7, **caractérisé en ce que** le circuit d'indicateur comprend un amplificateur (16).

9. Système RFID selon l'une des revendications 1 à 8, **caractérisé en ce que** l'antenne (12) est conçue comme une antenne électrique en forme de monopôle, de dipôle, de longueur mécaniquement résonnante ou raccourcie mécaniquement et allongée électriquement, ou **en ce que** l'antenne est conçue comme une antenne magnétique se présentant sous la forme d'une boucle, d'une bobine ou d'une antenne fendue, ou **en ce que** l'antenne comprend des composants qui présentent différentes polarisations et/ou différents diagrammes de rayonnement et/ou différents gains d'antenne.

10. Système RFID selon l'une des revendications 1 à 9, **caractérisé en ce que** différents types d'antennes peuvent être couplés de manière interchangeable comme antenne (12) au circuit d'indicateur (16, 18).
